# EUROPEAN PATENT SPECIFICATION

(11) **EP 1 600 282 B1**
(45) Date of publication and mention of the grant of the patent: **15.08.2007**
(21) Application number: 05007626.4
(22) Date of filing: 07.04.2005
(51) Int. Cl.: B29C 67/00, B29C 35/08

(54) **Method and apparatus for heating and flattening a parked powder wave**
Verfahren und Vorrichtung zum Erwärmen und Nivellieren eines deponierten Pulverhaufens
Procédé et dispositif de chauffage et de nivellement d'un tas de poudre déposé

(30) Priority: 28.05.2004 US 856303
(43) Date of publication of application: 30.11.2005
(73) Proprietor: 3D SYSTEMS, INC., Valencia, California 91355 (US)
(72) Inventor: Chung, Tae Mark, 91384 Castaic, CA (US); Delgado, Daniel Alfonso, 78748 Austin, TX (US)
(74) Representative: Hess, Peter K. G.

(56) References cited:
- US-A- 5 647 931
- US-A- 5 786 562
- US-A- 5 876 550
- US-A- 5 908 569
- US-A1- 2001 050 448
- US-A1- 2003 201 255

## Description

### BACKGROUND OF THE INVENTION

This invention is in the field of freeform fabrication, and is more specifically directed to the fabrication of three-dimensional objects by selective laser sintering.

The field of freeform fabrication of parts has, in recent years, made significant improvements in providing high strength, high density parts for use in the design and pilot production of many useful articles. Freeform fabrication generally refers to the manufacture of articles directly from computer-aided-design (CAD) databases in an automated fashion, rather than by conventional machining of prototype articles according to engineering drawings. As a result, the time required to produce prototype parts from engineering designs has been reduced from several weeks to a matter of a few hours.

By way of background, an example of a freeform fabrication technology is the selective laser sintering process practiced in systems available from 3D Systems, Inc., in which articles are produced from a laser-fusible powder in layerwise fashion. According to this process, a thin layer of powder is dispensed and then fused, melted, or sintered, by laser energy that is directed to those portions of the powder corresponding to a cross-section of the article. Conventional selective laser sintering systems, such as the Vanguard system available from 3D Systems, Inc., position the laser beam by way of an optics mirror system using galvanometer-driven mirrors that deflect the laser beam. The deflection of the laser beam is controlled, in combination with modulation of the laser itself, to direct laser energy to those locations of the fusible powder layer corresponding to the cross-section of the article to be formed in that layer. The computer based control system is programmed with information indicative of the desired boundaries of a plurality of cross sections of the part to be produced. The laser may be scanned across the powder in raster fashion, with modulation of the laser affected in combination with the raster scanning, or the laser may be directed in vector fashion. In some applications, cross-sections of articles are formed in a powder layer by fusing powder along the outline of the cross-section in vector fashion either before or after a raster scan that "fills" the area within the vector-drawn outline. In any case, after the selective fusing of powder in a given layer, an additional layer of powder is then dispensed, and the process repeated, with fused portions of later layers fusing to fused portions of previous layers (as appropriate for the article), until the article is complete.

Detailed description of the selective laser sintering technology may be found in U.S. Patent No. 4,863,538, U.S. Patent No. 5,132,143, and U.S. Patent No. 4,944,817, all assigned to Board of Regents, The University of Texas System, and in U.S. Patent No. 4,247,508, Housholder.

The selective laser sintering technology has enabled the direct manufacture of three-dimensional articles of high resolution and dimensional accuracy from a variety of materials including polystyrene, some nylons, other plastics, and composite materials such as polymer coated metals and ceramics. Polystyrene parts may be used in the generation of tooling by way of the well-known "lost wax" process. In addition, selective laser sintering may be used for the direct fabrication of molds from a CAD database representation of the object to be molded in the fabricated molds; in this case, computer operations will "invert" the CAD database representation of the object to be formed, to directly form the negative molds from the powder.

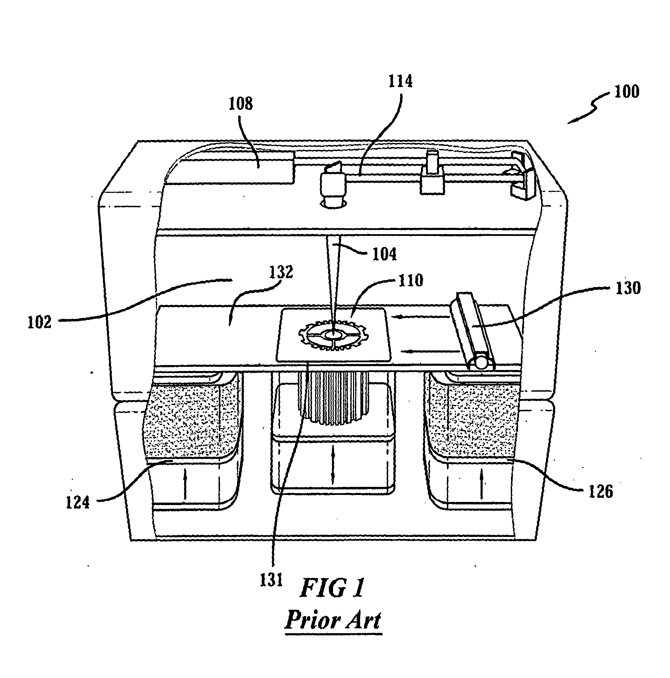

Figure 1 illustrates, by way of background, a rendering of a conventional selective laser sintering system, shown generally as the numeral **100** currently sold by 3D Systems, Inc. of Valencia, California. Figure 1 is a rendering shown without doors for clarity. A carbon dioxide laser **108** and its associated scanning system **114** are shown mounted in a unit above a process chamber **102** that includes a top layer of powder bed **132,** two powder feed systems **124,126,** and a spreading roller **130.** The process chamber maintains the appropriate temperature and atmospheric composition (typically an inert atmosphere such as nitrogen) for the fabrication of the article.

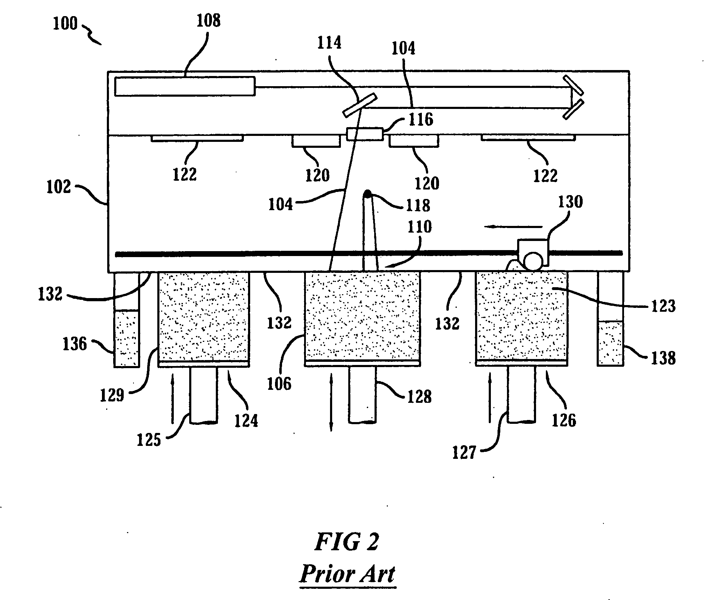

Operation of this conventional selective laser sintering system 100 is shown in Figure 2 in a front view of the process with no doors shown for clarity. A laser beam **104** is generated by laser **108,** and aimed at target area **110** by way of optics-mirror scanning system **114,** generally including galvanometer-driven mirrors that deflect the laser beam. The laser and galvanometer systems are isolated from the hot process chamber **102** by a laser window **116.** The laser window **116** is situated interiorly of radiant heater elements **120** that heat the target area **110** and the powder bed **132** below. These heater elements **120** may be ring shaped (rectangular or circular) panels or radiant heater rods that surround the laser window. The deflection of the laser beam is controlled in combination with modulation of laser **108** itself, to direct laser energy to those locations of the fusible powder layer corresponding to the cross-section of the article to be formed in that layer. Scanning system **114** may scan the laser beam across the powder in a raster-scan fashion, or in vector fashion. Scanning entails the laser beam **104** intersecting the powder surface in the target area **110.**

Two feed systems **(124,126)** feed powder into the system by means of a push-up piston system. Target area **110** receives powder from the two feed systems as described hereinafter. Feed system **126** first pushes up a measured amount of powder and a counter-rotating roller **130** picks up and spreads the powder over the powder bed **132** in a uniform manner. The counter-rotating roller **130** passes completely over the target area **110** and powder bed **132** and then dumps any residual powder into an overflow receptacle **136.** Positioned nearer the top of the chamber are radiant heater elements **122** that pre-heat the feed powder and a ring or rectangular shaped radiant heater element **120** for heating the surface of the powder bed **132.** Element **120** has a central opening which allows a laser beam to pass through the laser window or optical element **116.** After a traversal of the counter-rotating roller **130** across the powder bed **132,** the laser **108** selectively fuses the layer just dispensed. The roller **130** then returns from the area of the overflow receptacle **136,** the feed piston **125** pushes up a prescribed amount of powder, the roller **130** dispenses powder over the target area **110** in the opposite direction and roller **130** proceeds to the other overflow receptacle **138** to drop any residual powder. Before the roller begins each traverse of the system the center part bed piston **128** drops by the desired layer thickness to make room for additional powder.

The powder delivery system in system **100** includes feed pistons **125** and **127,** controlled by motors (not shown) to move upwardly and lift, when indexed, a volume of powder into chamber **102.** Part bed piston **128** is controlled by a motor (not shown) to move downwardly below the floor of chamber **102** by a small amount, for example 0.125 mm, to define the thickness of each layer of powder to be processed. Roller **130** is a counter-rotating roller that translates powder from feed pistons **125** and **127** onto target area **110.** When traveling in either direction the roller **130** carries any residual powder not deposited on the target area into overflow receptacles **(136,138)** on either end of the process chamber **102.** Target area **110,** for purposes of the description herein, refers to the top surface of heat-fusible powder (including portions previously sintered, if present) disposed above part piston **128.** The sintered and unsintered powder dispensed on part bed piston **128** is referred to as part cake **106.** System **100** of Figure 2 also requires radiant heaters **122** over the feed pistons to pre-heat the powders to minimize any thermal shock as fresh powder is spread over the recently sintered and hot target area **110.** This type of dual push-up piston feed system, providing fresh powder from below the target area, with heating elements for both feed beds and the part bed or target area is implemented commercially in the Vanguard selective laser sintering system sold by 3D Systems, Inc. of Valencia, California.

Another known powder delivery system, like it is disclosed in the US 5,647,931, according to the preamble of claim 14, uses overhead hoppers to feed powder from above and either side of target area **110,** in front of a delivery apparatus such as a wiper or scraper. The US 5,908,569 discloses a plurality of straight radiant heaters for heating a powder layer of a laser sintering apparatus.

There are advantages and disadvantages to each of these systems. Both require a number of mechanisms, either push-up pistons or overhead hopper systems with metering feeders to effectively deliver metered amounts of powder to each side of the target area and in front of the spreading mechanism (either a roller or a wiper blade).

Although a design such as system **100** has proven to be very effective in delivering both powder and thermal energy in a precise and efficient way there is a need to do so in a more cost effective manner by reducing the number of mechanisms and improving the pre-heating of fresh powder to carry out the selective laser sintering process. A method and apparatus for pre-heating fresh powder for doing that is presented in EP-A-1600281.

Briefly, this concurrently filed co-pending application provides for a method and apparatus with a depositing step for fresh powder wherein the depositing step includes at least depositing all of the powder required for two successive layers on the first side of target area in the process chamber which simultaneously spreads the powder for the first successive layer while transporting the powder for the second successive layer to the opposing second side of the target area. The apparatus includes a powder feed hopper, located above and on the first side of the target area, for feeding desired amounts of the powder, a means for spreading a first layer of powder over the target area while carrying a second quantity of powder to the second side of the target area to be used for a second layer of powder, and a means for depositing the second quantity of powder on the opposing second side of target area.

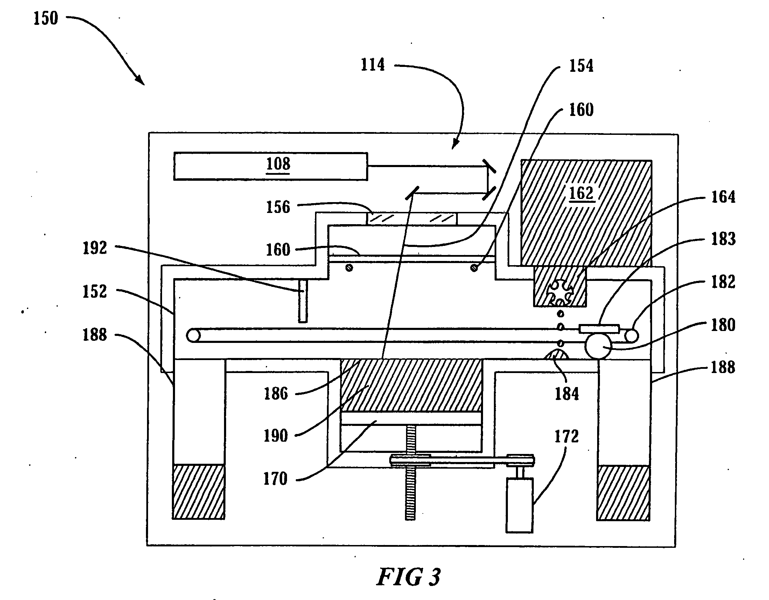

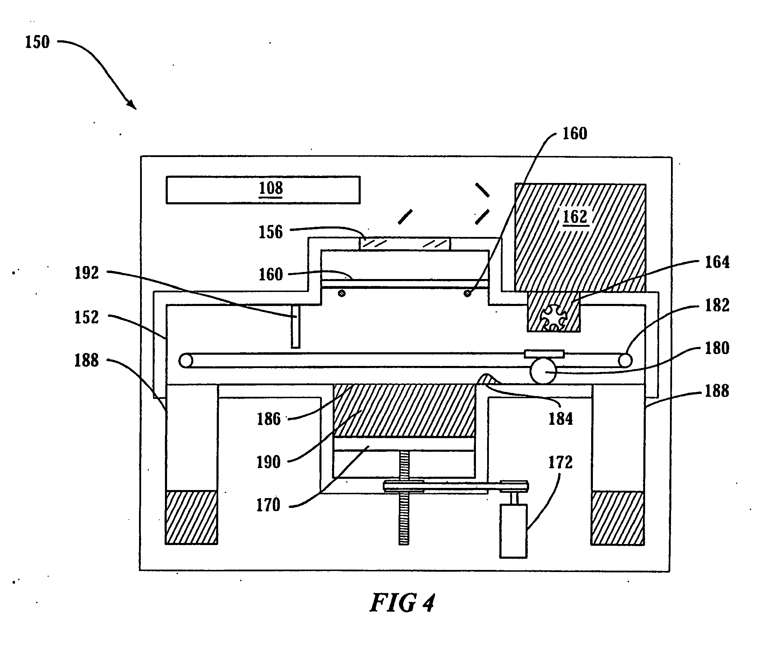

Figures 3 & 4 show a parked powder wave **184** initially being deposited from an overhead feed mechanism and subsequently positioned next to target area **186** during the laser scanning of the target area. The parked powder wave **184** is so placed to expose the powder wave to the radiant energy of heaters **160.** This allows the radiant heaters **160,** which are maintaining the proper temperature of the target area **186,** to also pre-heat the powder wave **184** that will be used in the next layer to reduce or eliminate the need to separately pre-heat the next layer of powder. This technique, while effective, suffers because of the poor thermal conductivity of polymer powders and its effect on the mound of powder in the parked wave that consequently heats more slowly than desired, resulting in a longer than desired delay before spreading the next layer. Additionally, there is the potential in this approach when feeding small particle size powders that a dust cloud can be generated when powder from feed mechanism **164** falls directly from the feed mechanism to the floor of the process chamber in forming parked powder wave **184.**

There is thus a need to speed up the process of heating the parked wave of powder without increasing the temperature of the radiant heaters **160,** which would adversely affect the temperature of the target area **180.** There is also a need to significantly reduce the potential of dusting of the powders falling from the feed mechanism **164** onto the floor of the process chamber.

### BRIEF SUMMARY OF THE INVENTION

It is therefore an aspect of the present invention to provide a method and apparatus to rapidly heat the parked fresh powder wave.

It is also an aspect of the instant invention to reduce the potential of dust being created by the falling of powder from an overhead feeder onto the floor of the process chamber.

It is a feature of the present invention that the cover or cowling overlying the roller mechanism extends sufficiently far toward the powder bed surface to smooth or flatten the wave or mound of the fresh powder deposited adjacent the target area.

It is another feature of the present invention that the cover or cowling overlying the roller mechanism is angled on opposing sides to permit the fresh powder to slide along it to the powder bed.

It is an advantage of the present invention that the fresh powder wave is deposited on the powder bed surface and flattened out by the cover or cowling overlying the roller mechanism.

The invention includes a method for forming a three dimensional article by laser sintering that includes at least the steps of: depositing a quantity of powder on a first side of a target area; flattening the first quantity of powder on the first side of the target area; spreading the powder with a spreading mechanism to form a first smooth surface; directing an energy beam over the target area causing the powder to form an integral layer; depositing a second quantity of powder on a second side of the target area; flattening the second quantity of powder on the second side of the target area; spreading the powder with the spreading mechanism to form a second smooth surface; directing the energy beam over the target area causing powder to form a second integral layer bonded to the first integral layer; and repeating the steps to form additional layers that are integrally bonded to adjacent layers so as to form a three dimensional article, wherein the depositing step includes at least depositing all of the powder required for two successive layers on the first side of the target area and simultaneously spreading the powder for the first successive layer while transporting the powder for the second successive layer to the second side of the target area.

The invention also includes an apparatus for producing parts from a powder comprising a chamber having a target area at which an additive process is performed, the target area having a first side and a second side; a means for fusing selected portions of a layer of the powder at the target area; a powder feed hopper, located above and on the first side of the target area for feeding desired amounts of the powder; a means for flattening a first quantity of powder on the first side of the target area; a means for spreading a first layer of powder over the target area while carrying a second quantity of powder to the second side of the target area to be used for a second layer of powder; a means for depositing the second quantity of powder on the second side of target area, a means for flattening the second quantity of powder on the second side of the target area; and a means for spreading the second quantity of powder over the target area.

### BRIEF DESCRIPTION OF DRAWINGS

These and other aspects, features and advantages of the invention will become apparent upon consideration of the following detailed disclosure, especially when taken in conjunction with the accompanying drawings wherein:
Figure 1 is a diagrammatic view of a conventional prior art selective laser-sintering machine;
Figure 2 is a diagrammatic front elevation view of a conventional prior art selective laser-sintering machine showing some of the mechanisms involved;
Figure 3 is a diagrammatic front elevation view of the system of the co-pending application showing the metering of the powder in front of the roller;
Figure 4 is a diagrammatic front elevation view of the system of the co-pending application showing the retraction of the roller mechanism and the parking of it under the feed mechanism while the laser is selectively heating the target area and the radiant heater is pre-heating the parked powder wave;
Figure 5 is a partial diagrammatic front elevation view of the system of the present invention showing a design aspect of modified cover of the roller mechanism;
Figure 6 is a partial diagrammatic front elevation view of the system of the present invention showing the depositing of powder using the cover of the roller mechanism;
Figure 7 is a partial diagrammatic front elevation view of the system of the present invention showing the parking of the first powder quantity near the part bed;
Figure 8 is a partial diagrammatic front elevation view of the system of the present invention showing the method of flattening of the parked powder wave;
Figure 9 is a diagrammatic front elevation view of the system of the present invention showing the metering of the first quantity of powder;
Figure 10 is a diagrammatic front elevation view of the system of the present invention showing the parking of the powder wave near the part bed;
Figure 11 is a diagrammatic front elevation view of the system of the present invention showing the retraction of the spreading mechanism, the flattening of the parked powder wave, and the parking of the spreading mechanism under the feed mechanism while the laser is selectively heating the target area and the radiant heater is pre-heating the flattened parked powder wave;
Figure 12 is a diagrammatic front elevation view of the system of the present invention showing the dispensing of the second layer of powder onto the top of the roller mechanism and the radiant heater is pre-heating the flattened parked powder wave;
Figure 13 is a diagrammatic front elevation view of the system of the present invention showing the first layer of powder being distributed across the target area and the second layer of powder being carried on top of the roller mechanism to the opposing second side of the target area;
Figure 14 is a diagrammatic front elevation view of the system of the present invention showing the depositing of the second layer of powder in front of the roller and depositing of residual powder from the first layer in the overflow receptacle;
Figure 15 is a diagrammatic front elevation view of the system of the present invention showing the parking of the second powder wave near the target area;.
Figure 16 is a diagrammatic front elevation view of the system of the present invention showing the parking of the roller to the side and the flattening of the second parked powder wave while the laser is selectively heating the target area and the radiant heater is pre-heating the flattened parked powder wave;
Figure 17 is a diagrammatic front elevation view of the system of the present invention showing the second layer of powder being distributed across the target area;
Figure 18 is a diagrammatic front elevation view of the system of the present invention showing the roller completing one cycle by depositing residual powder in the overflow receptacle; and
Figure 19 is a diagrammatic front elevational view of an alternative embodiment of the system of the present invention showing a second stationary blade for dislodging and depositing of the first layer of powder in front of the roller on the opposing side of the target area from the first stationary blade.

### DETAILED DESCRIPTION OF THE INVENTION

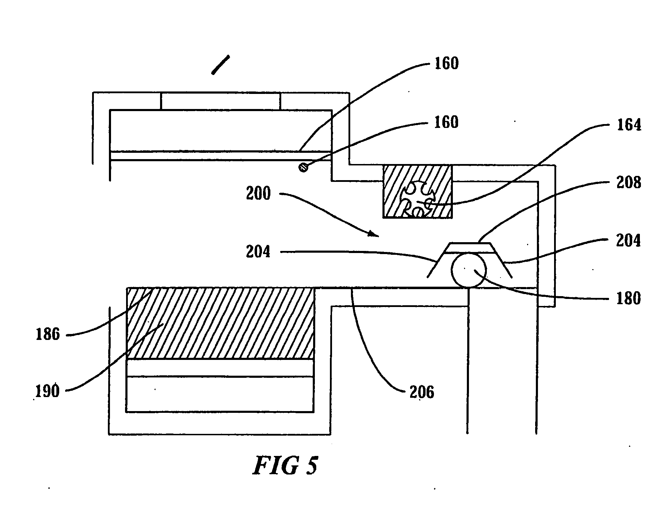

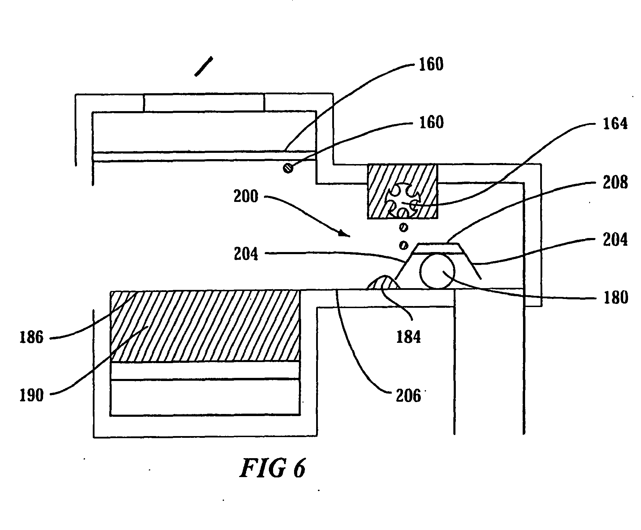

The concept of the present invention includes a redesign of the overlaying structure or cowling covering the roller mechanism. Referring to Figure 5 the new roller assembly is shown overall by the numeral **200.** Over roller mechanism **180** is a flat top powder support or carrying surface **208** that is used by the process to carry the powder quantity needed for the second side of the chamber. A cover **204** is added to the structure that is angled outwardly on each side to provide adequate clearance for the powder wave created by the roller. The cover **204** extends downwardly at an angle on opposing sides leaving a small clearance between the roller in roller mechanism **180** and the floor **206** of the process chamber **152.** In operation, as seen in Figure 6, the process begins with the roller mechanism **180** parked below and slightly to the side of the overhead feed mechanism **164.** The first quantity of powder is discharged to fall on the exterior of cover **204** and slides down forming a powder wave **184** on the floor **206** adjacent to roller mechanism **180.** By dropping the powder onto the exterior cover of roller assembly **200** in this manner the creation of a dust cloud is substantially reduced. The powder falls a shorter distance before its vertical fall is interrupted than previously by striking cover **204** at an angle, thereby reducing its terminal velocity, and sliding gently down onto the floor **206** of the process chamber **152.** The deposited quantity of powder will be referred to as a parked powder wave.

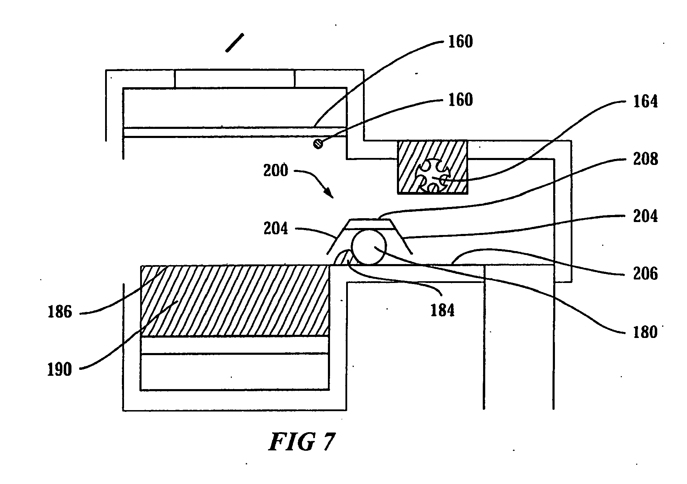

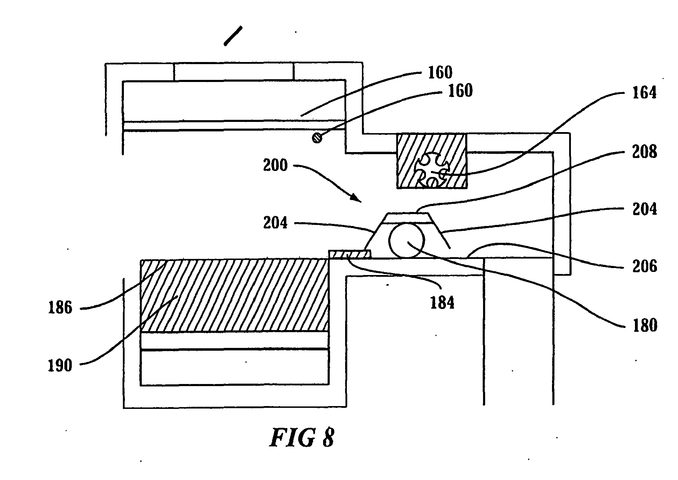

In the next step, as seen in Figure 7, roller mechanism **180** is activated and moves to push powder wave **184** and park it on the edge of target area **186.** The powder wave **184** is flattened by the leading edge of roller cover **204** as it passes over the powder wave but is built up again by the action of the roller mechanism **180.** When roller mechanism **180** reverses direction though (see Figure 8) and returns to its position under the feed mechanism **164** the inside edge of the roller cover **204** cleanly flattens the powder wave **184** into a thinner wave that allows much more rapid heating of parked powder wave **184** by radiant heaters **160.** This design and process reduces heating time of powder wave **184** before the ensuing process steps that include advancing roller mechanism **180** across target area **186** to spread the next layer of pre-heated powder across the target area.

The same sequence of steps on the opposing second side of the process chamber **102** will flatten the parked powder wave on that side of the chamber once the second powder wave is dislodged from the top powder support or carrying surface **208,** as will be explained hereafter. Although the roller mechanism **180** described is a preferred one, it should be evident that a number of variations of shapes of the roller assembly **200** could accomplish the twin goals of providing a gentle landing of the disbursed powder and flattening of the powder wave prior to pre-heating the wave.

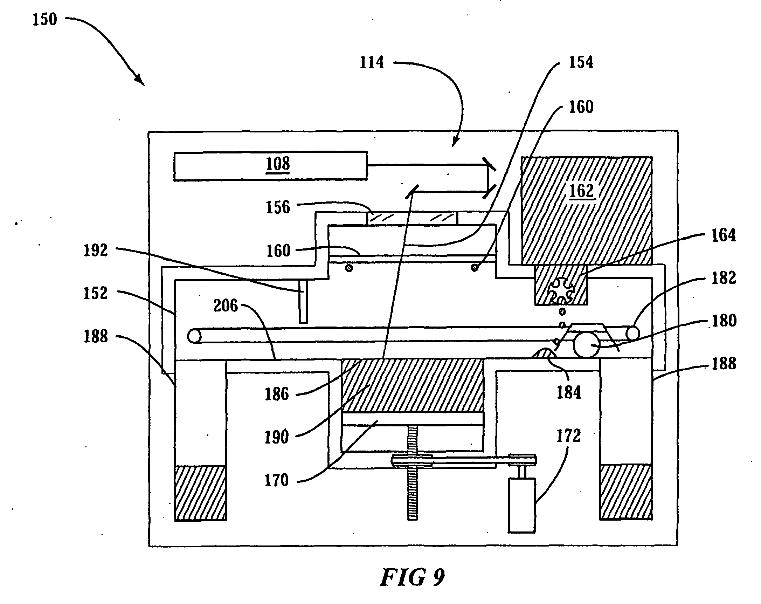

A laser sintering system employing the present invention is shown in Figure 9 indicated generally by the numeral **150.** The process chamber is shown as **152.** The laser beam **154** passing from laser **108** through the optics mirror scanning system **114** enters the chamber **152** through a laser window **156** that isolates the laser and optics (not shown) from the higher temperature environment of the process chamber **152.** The optics mirror scanning system **114** is similar to the one described in the prior art, but any suitable design may be employed. Radiant heating elements **160** provide heat to the target area **186** and to the powder in areas immediately next to the target area **186.** These radiant heaters can be any number of types including, for example, quartz rods or flat panels or combinations thereof. A preferred design employs fast response quartz rod heaters.

A single overhead powder feed hopper **162** is shown with a bottom feed mechanism **164** controlled by a motor (not shown) to control the amount of powder dropped onto the process chamber floor **206** below. The feed mechanism **164** can be of several types including, for example, a star feeder, an auger feeder, a belt feeder, a slot feeder or a rotary drum feeder. A preferred feeder is a rotary drum. A part piston **170** is controlled by a motor **172** to move downwardly below the floor **206** of the chamber **152** by a small amount, for example 0.125 mm, to define the thickness of each layer of powder to be processed.

Still referring to Figure 9, roller mechanism **180** includes a counter-rotating roller, driven by motor **182,** that spreads powder from powder wave **184** across the laser target area **186.** When traveling in either direction the roller carries any residual powder not deposited on the target area into overflow receptacles **188** on opposing ends of the chamber **152.** Target area **186,** for purposes of the description herein, refers to the top surface of heat-fusible powder (including portions previously sintered, if present) disposed above part piston **170.** The sintered and unsintered powder disposed on part piston **170** will be referred to herein as part cake **190.** Although the use of counter-rotating roller mechanism **180** is preferred, the powder can also be spread by other means such as a wiper or a doctor blade.

Operation of the selective laser sintering system of this invention is shown beginning in Figure 9. In a first powder dispensing step powder is metered from above from feed mechanism **164** onto cover structure **204** and then slides to a position on the floor **206** in front of roller mechanism **180.** The quantity of powder metered will depend upon the size of target area **186** and the desired layer thickness to be formed.

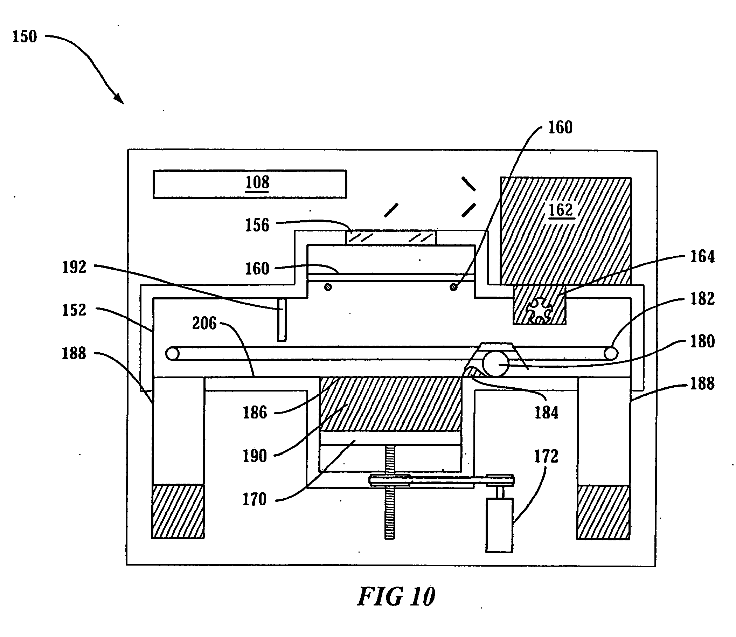

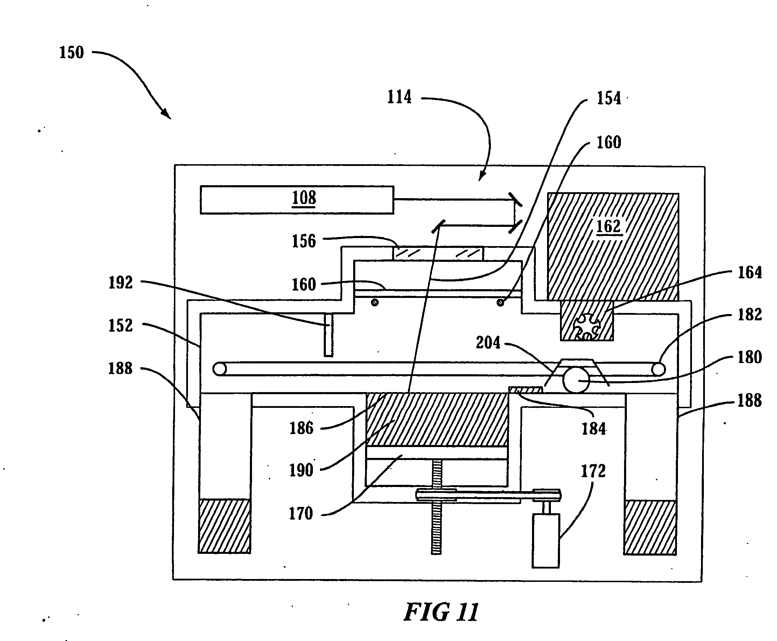

In a second step, shown in Figure 10, the counter-rotating roller mechanism is activated to move the powder wave slightly forward and park it at the edge of target area **186** in view of radiant heater elements **160.** In a third step, shown in Figure 11, roller mechanism **180** is moved back and roller cover structure **204** flattens parked powder wave **184.** Roller mechanism **180** is then parked under feed mechanism **164.** In iterations other than the first quantity of powder metered from feed mechanism **164,** the laser is then turned on and laser beam **154** scans the current layer to selectively fuse the powder on that layer. While the laser is scanning, roller mechanism **180** remains parked directly under the powder feeder mechanism. Also while the laser is scanning, flattened parked powder wave **184** is pre-heated by the action of radiant heater elements **160.** This step can eliminate the need for separate radiant heaters to pre-heat the powder.

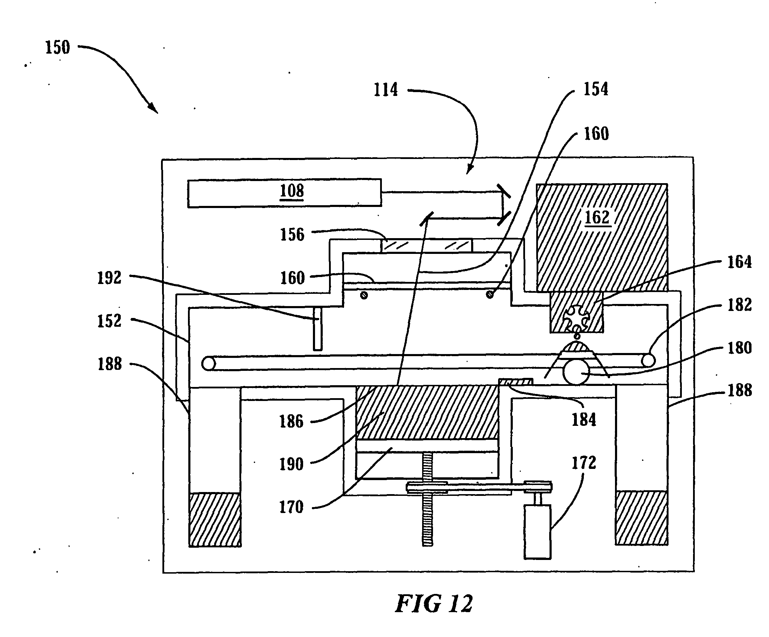

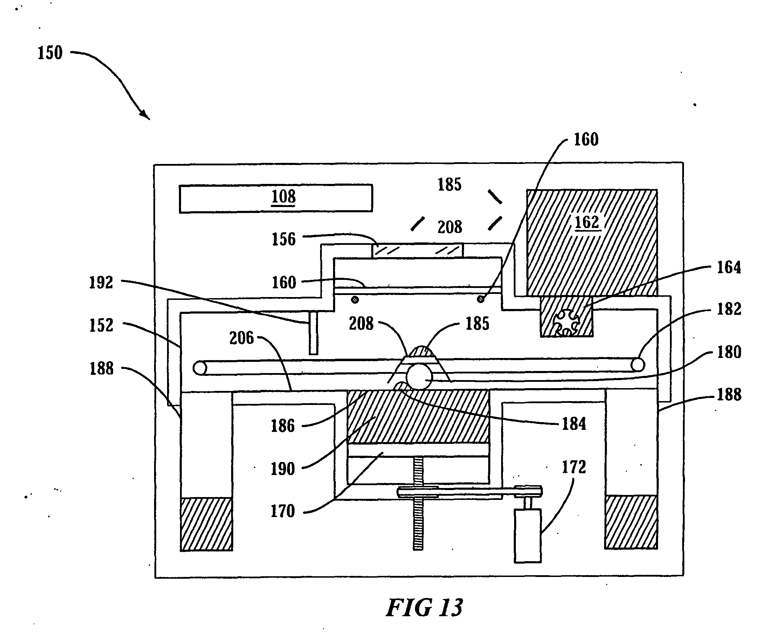

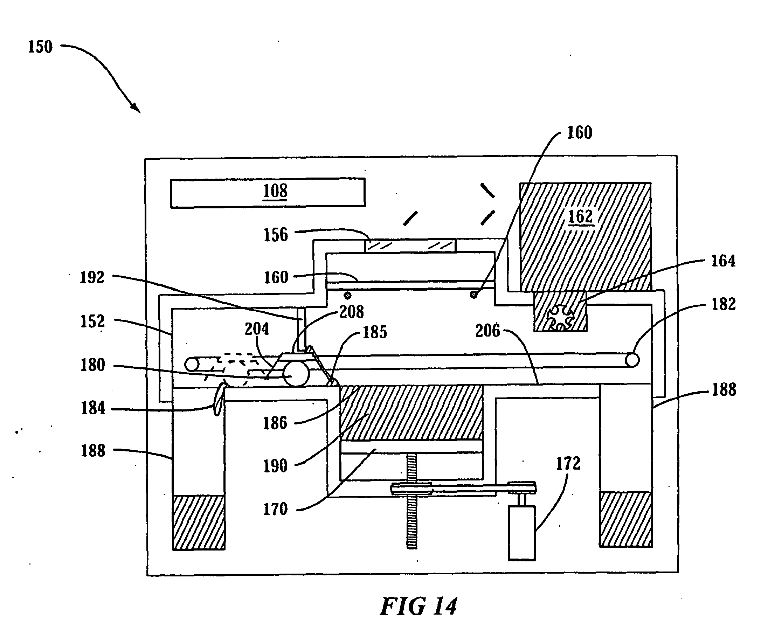

In a next step, shown in Figure 12, a second powder wave **185** is fed onto top powder support or carrying surface **208** of roller mechanism **180.** After scanning of the current layer of powder the next step, shown in Figure 13, begins. Roller mechanism **180** is activated and traverses across the process chamber **152,** spreading the first layer of pre-heated powder **184** across the target area **186,** while carrying the second layer of powder in second powder wave **185** on top powder support surface **208** of roller mechanism **180.** In the next step, shown in Figure 14, a mounted stationary blade **192** dislodges the second powder wave **185** off the top powder support surface **208** of roller mechanism **180** as the roller passes under the blade **192.** The dislodged powder slides down the inboard side of angled cover **204,** depositing the second powder wave **185** on the floor **206** of process chamber **152** while the roller mechanism **180** proceeds to feed any excess powder into overflow receptacle **188.** The apparatus is not limited to a stationary blade for dislodgement, but could encompass any mechanism that would dislodge the powder from the top powder supporting or carrying surface **208** of roller mechanism **180** such as a skive, roller or brush.

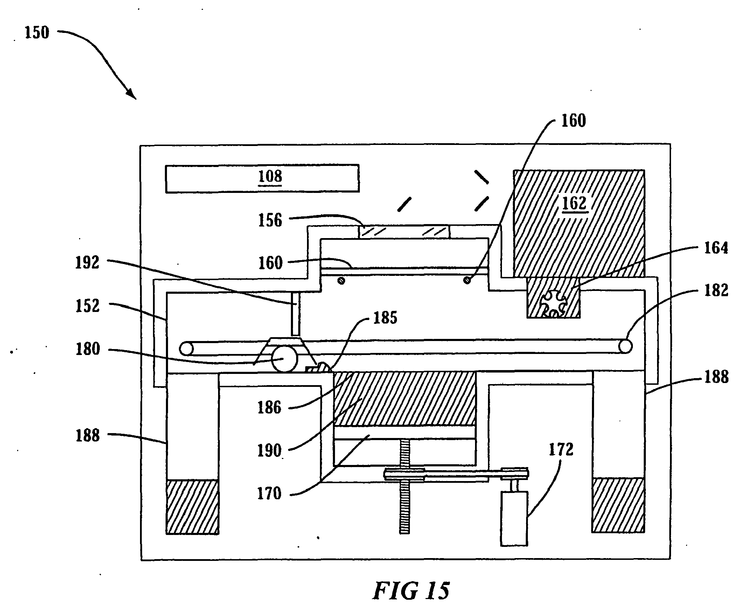

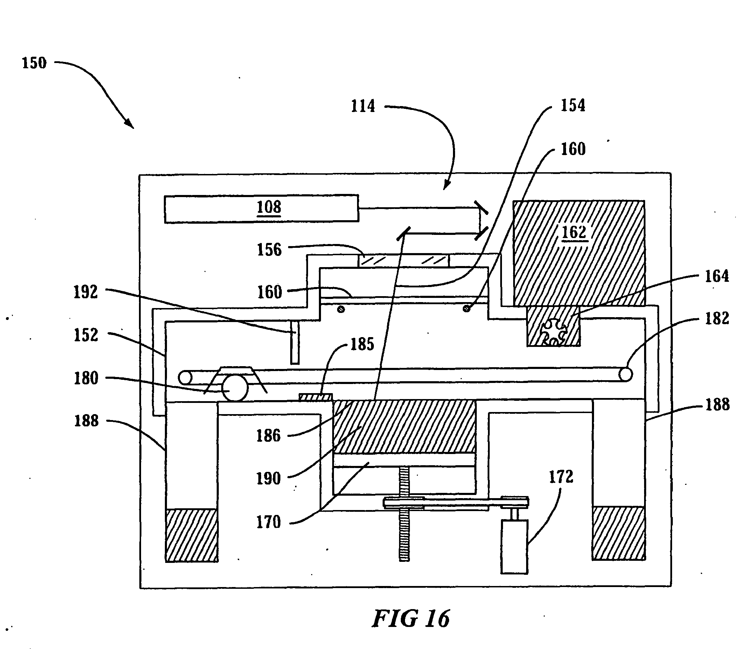

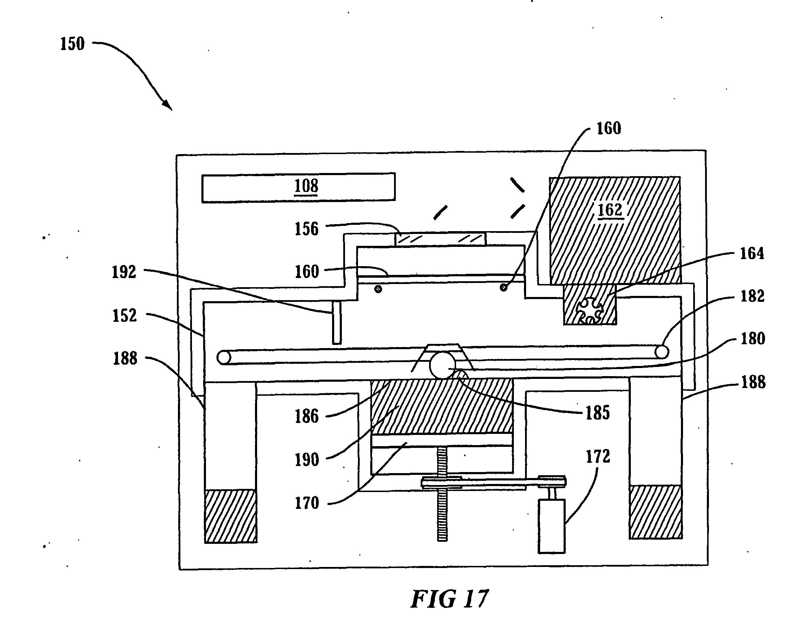

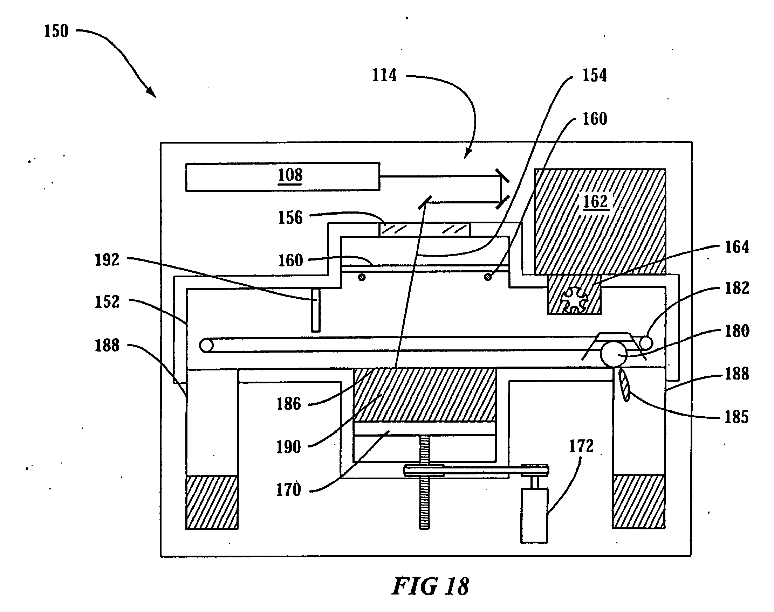

In the next step, shown in Figure 15, roller mechanism **180** immediately reverses and moves to park the second powder wave **185** near the target area **186** and in sight of the radiant heater elements **160** sufficiently close to receive heating effects from them. In the next step (Figure 16) of this preferred embodiment, roller mechanism **180** moves back and flattens parked powder wave **185,** with the inboard side of angled cover **204** contacting and leveling the mound of second powder wave **185.** Roller mechanism **180** then parks while the laser scanning action is completed and the flattened second quantity of powder in second powder wave **185** is being pre-heated by the radiant heating elements **160.** After the laser scanning action is completed, roller mechanism **180** is then activated and moves to spread the second quantity of powder in second powder wave **185** over target area **186** as shown in Figure 17. After spreading the powder roller mechanism **180,** as seen in Fig. 18, proceeds to the end of its run and drops any excess powder into overflow receptacle **188.** This completes the cycle and the next cycle is ready to proceed as in Figure 9.

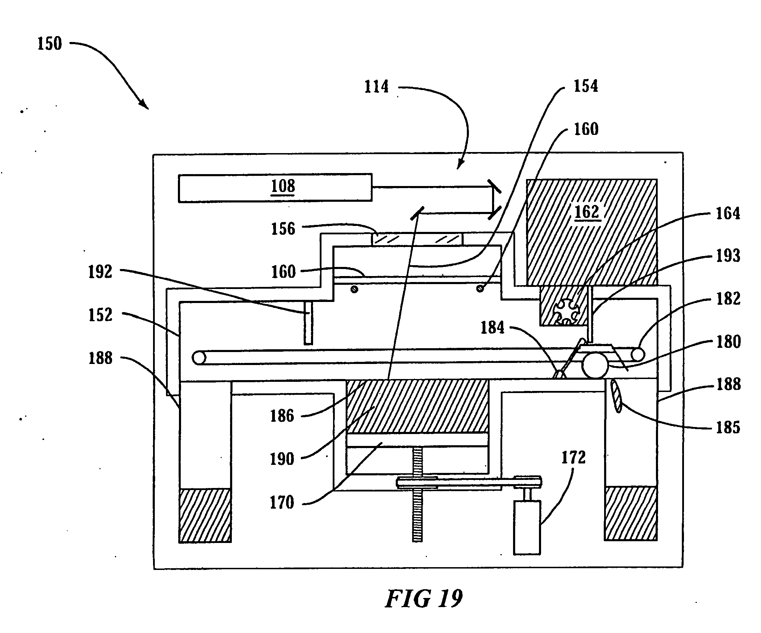

An alternative design can include a second mounted stationary blade **193** shown in Figure 19 outboard of the bottom feed mechanism **164** on the opposing side from blade **192** so that a quantity of powder to be deposited on the powder support surface **208** is always present and being preheated for each traversal of the roller mechanism **180** across the target area **186.** In this approach, the iterative cycle has the first parked powder wave **184** be deposited on the top powder support surface **208** of the roller mechanism **180.** The roller mechanism **180** is moved a short distance toward blade **193** so that the blade dislodges the quantity of powder that forms parked powder wave **184.** The roller mechanism **180** moves forward and then reverses direction a short distance so what is now the inboard side of angled cover **204** of roller mechanism **180** flattens parked powder wave **184** to promote faster preheating. Roller mechanism **180** reverses its direction to pull away from the leveled mound of powder and remains stationary while pre-heating occurs for the first quantity of powder metered in the first iteration and in subsequent iterations while laser scanning occurs. For the first iteration roller mechanism **180** is repositioned under the bottom of feed mechanism **164** and the powder carrying surface **208** is refilled with the second powder wave **185.**

This inventive design achieves rapid and efficient pre-heating of distributed powder before it is spread across the target area of a selective laser sintering system and reduces the potential of dust clouds forming from dropped powder striking the floor of the process chamber.

While the invention has been described above with references to specific embodiments, it is apparent that many changes, modifications and variations in the materials, arrangement of parts and steps can be made. For example, the pre-heating of the parked powder waves may employ the use of the laser beam, either on low power or with a fast scan speed to assist in elevating the powder temperature but not initiate melting or softening of the powder to the extent that even spreading across the powder bed is hampered. Additionally, additional radiant heating panels, such as Watlow flat panel heaters, can be positioned above the parked powder locations on opposing sides of the process chamber suitably mounted, such as in the roller mechanism's traversing

## Claims

1. A method for forming a three dimensional article by laser sintering comprising the steps of:
(a) depositing, in a first depositing step, a first quantity of powder (184) on a first side of a target area (186);
(b) flattening, in a first flattening step, the first quantity of powder (184) on the first side of target area (186);
(c) pre-heating the flattened first quantity of powder (184);
(d) spreading, in a first spreading step, the first quantity of powder (184) with a spreading mechanism (180) to form a first layer of powder;
(e) directing an energy beam (154) over the target area (186) causing the first layer of powder to form an integral layer;
(f) depositing, in a second depositing step, a second quantity of powder (185) on an opposing second side of the target area (186);
(g) flattening, in a second flattening step, the second quantity of powder (185) on the second side of the target area (186);
(h) pre-heating the flattened second quantity of powder (185);
(i) spreading, in a second spreading step, the second quantity of powder (185) with the spreading mechanism (180) to form a second layer of powder;
(j) directing the energy beam (154) over the target area (186) causing the second layer of powder to form a second integral layer bonded to the first integral layer;
(k) repeating steps (a) to (j) to form additional layers that are integrally bonded to adjacent layers so as to form a three dimensional article, wherein the first depositing step comprises feeding the first quantity of powder (184) in front of the spreading mechanism (180) and feeding the second quantity of powder (185) on the spreading mechanism (180) wherein the second quantity of powder (185) is carried during the first spreading step from the first side to the second side of the target area (186) and the second depositing step comprises dislodging the second quantity of powder (185) from the moving spreading mechanism (180) to deposit the second quantity of powder on the second side of the target area (186).

2. The method of claim 1 further comprising using a roller (180) as the spreading mechanism.

3. The method of claim 2 wherein the roller (180) is a counter-rotating roller.

4. The method of claim 1 further comprising using a wiper blade as the spreading mechanism.

5. The method of claim 3 comprising using a laser beam (154) in the directing step.

6. The method of claim 5 wherein the laser beam (154) is a carbon dioxide laser.

7. The method of claim 1 further comprising depositing the quantity of powder (184, 185) from an overhead feed mechanism (162, 164) onto a powder carrying structure (208) on the spreading mechanism (180).

8. The method of claim 1 wherein the dislodging of the second quantity of powder (185) from the moving spreading mechanism (180) is accomplished by a stationary blade (192).

9. The method of claim 1 wherein the flattening steps utilize a cover (204) attached to the spreading mechanism (180) that flattens the first and second quantities of powder (184, 185) after they are deposited.

10. The method of claim 1 further comprising depositing the first quantity of powder (184) from an overhead feed mechanism (162, 164) onto a powder carrying structure (208) on the spreading mechanism (180).

11. The method of claim 10 further comprising dislodging the first quantity of powder (184) from the powder carrying structure on a side adjacent the target area (186).

12. The method of claim 1 wherein
(a) after the first flattening step, the pre-heating of the first quantity of powder (184) is done by means of radiant heat; and
(b) after the second flattening step, the pre-heating of the second quantity of powder (185) by means of radiant heat.

13. The method of claim 12 further comprising using laser energy to heat the first quantity and the second quantity of powder.

14. An apparatus (150) for producing parts from a powder, comprising in combination:
(a) a chamber (152) having a target area (186) at which an additive process is performed, the target area (186) having a first side and an opposing second side;
(b) means (154) for fusing selected portions of a layer of the powder at the target area (186);
(c) a powder feed hopper (162, 164), located above and on the first side of the target area (186) for depositing a first and a second quantity of powder (184, 185) into the chamber (152);
(d) means (180) for spreading the first quantity of powder (184) as a first layer of powder over the target area (186);
(e) means (192, 204) for depositing the second quantity of powder (185) on the second side of target area (186);
(f) means (180) for spreading the second quantity of powder (185) over the target area (186);
(g) means (160) for pre-heating the quantities of powder (184, 185) in the chamber; **characterized by**
(h) means (204) for flattening the first quantity of powder (184) before it is spread;
(i) means (204) for flattening the second quantity of powder (185) before it is spread; wherein
(j) the means (180) for spreading the first quantity of powder (184) comprises a carrying surface (208) to receive the second quantity of powder (185) and to carry the second quantity of powder (185) while spreading the first quantity of powder (184) to the opposing second side of the target area (186) to be used for forming a second layer of powder (185).

15. The apparatus of claim 14, wherein the means (180) for spreading comprises:
(a) a roller; and
(b) a motor coupled to the roller for moving the roller across the target area (186) to spread the first layer of powder (184).

16. The apparatus of claim 14, wherein the means (192, 204) for depositing the second amount of powder (185) on the second side of the target area (186) further comprises a device (192) for dislodging the second quantity of powder (185) from the carrying surface (204).

17. The apparatus of claim 16 wherein the device (192) for dislodging the second amount of powder (185) is a stationary blade (192).

18. The apparatus of claim 14 further comprising a second device (193) for dislodging powder from the carrying surface (204) positioned on the opposing side of the target area (186) from the first device (192).

19. The apparatus of claim 18 wherein the second device (193) for dislodging powder further comprises a second stationary blade (193).

20. The apparatus of claim 14 wherein the means for fusing selected portions of a layer of the powder at the target area comprises:
(a) a energy beam (154);
(b) an optics mirror system (114) to direct the energy beam (154); and
(c) energy beam control means coupled to the optics mirror system (114) including computer means, the computer means being programmed with information indicative of the desired boundaries of a plurality of cross sections of the part to be produced.

21. The apparatus of claim 20 wherein the energy beam (154) is a laser energy beam (154).

22. The apparatus of claim 15 further comprising cover elements (204) attached to and on opposing sides of the carrying surface (208) for flattening each of the first and second quantities of powder (184, 185).

23. The apparatus of claim 16 wherein the cover elements (204) attached to the carrying surface (208) extend downwardly and away from the carrying structure to a height above the target area (186) equivalent to desired height of a flattened powder wave.

24. The apparatus of claim 14 wherein the means (160) for heating powder are radiant heating elements (160).

25. The apparatus of claim 24 wherein the means for heating powder further comprises a laser energy beam (154).

## Patentansprüche

1. Verfahren zum Bilden eines dreidimensionalen Gegenstandes durch Lasersintern, aufweisend die folgenden Schritte:
(a) Ablagern einer ersten Menge von Pulver (184) an einer ersten Seite des Zielgebiets (186) in einem ersten Ablagerungsschritt;
(b) Einebnen der ersten Menge von Pulver (184) an der ersten Seite des Zielgebiets (186) in einem ersten Einebnungsschritt;
(c) Vorheizen der eingeebneten ersten Menge von Pulver (184);
(d) Verteilen der ersten Menge von Pulver (184) mit einem Verteilungsmechanismus (180) in einem ersten Verteilungsschritt, um eine erste Lage des Pulvers zu bilden;
(e) Richten eines Energiestrahls (184) über das Zielgebiet (186); um zu bewirken, dass die erste Schicht von Pulver eine zusammenhängende Schicht bildet;
(f) Ablagern einer zweiten Menge von Pulver (185) an einer gegenüberliegenden zweiten Seite des Zielgebiets (186) in einem zweiten Ablagerungsschritt;
(g) Einebnen der zweiten Menge von Pulver (185) an der zweiten Seite des Zielgebiets (186) in einem zweiten Einebnungsschritt;
(h) Vorheizen der eingeebneten zweiten Menge von Pulver (185);
(i) Verteilen der zweiten Menge von Pulver (185) mit dem Verteilungsmechanismus (180) in einem zweiten Verteilungsschritt, um eine zweite Lage von Pulver zu bilden;
(j) Richten des Energiestrahls (154) über das Zielgebiet (186), um zu bewirken, dass die zweite Schicht von Pulver eine zweite zusammenhängende Lage bildet, die mit der ersten zusammenhängenden Lage verbunden ist;
(k) Wiederholen der Schritte (a) bis (j), um zusätzliche Lagen zu bilden, die integral mit benachbarten Lagen verbunden sind, um einen dreidimensionalen Gegenstand zu bilden, wobei der erste Ablagerungsschritt ein Zuführen der ersten Menge von Pulver (184) vor den Verteilungsmechanismus (180) umfasst und ein Zuführen der zweiten Menge von Pulver (185) auf den Verteilungsmechanismus (180) umfasst, wobei die zweite Menge von Pulver (185) während des ersten Verteilungsschritts von der ersten Seite zu der zweiten Seite des Zielgebiets (186) getragen wird und der zweite Ablagerungsschritt ein Entfernen der zweiten Menge von Pulver (185) von dem sich bewegenden Verteilungsmechanismus (180) umfasst, um die zweite Menge von Pulver an der zweiten Seite des Zielgebiets (186) abzulagern.

2. Verfahren gemäß Anspruch 1, weiterhin aufweisend das Verwenden einer Rolle 180 als Verteilungsmechanismus.

3. Verfahren gemäß Anspruch 2, wobei die Rolle (180) eine gegenläufig rotierende Rolle ist.

4. Verfahren gemäß Anspruch 1, weiterhin aufweisend das Verwenden einer Streichklinge als Verteilungsmechanismus.

5. Verfahren gemäß Anspruch 3 aufweisend das Verwenden eines Laserstrahls (154) im Richtungsschritt.

6. Verfahren gemäß Anspruch 5, wobei der Laserstrahl (154) ein Kohlendioxidlaser ist.

7. Verfahren gemäß Anspruch 1, weiterhin aufweisend ein Ablagern der Menge von Pulver (184, 185) von einem Überkopf-Zuführmechanismus (162, 164) auf eine Pulvertragestruktur (208) an dem Verteilungsmechanismus (180).

8. Verfahren gemäß Anspruch 1, wobei das Entfernen der zweiten Menge von Pulver (185) von dem sich bewegenden Verteilungsmechanismus (180) von einer feststehenden Klinge (192) durchgeführt wird.

9. Verfahren gemäß Anspruch 1, wobei der Einebnungsschritt eine Abdeckung (204) verwendet, die an dem Verteilungsmechanismus (180) befestigt ist, die die ersten und zweiten Mengen von Pulver (184, 185) einebnet, nachdem sie abgelagert wurden.

10. Verfahren gemäß Anspruch 1, weiterhin aufweisend ein Ablagern der ersten Menge von Pulver (184) von einem Überkopf-Zuführmechanismus (162, 164) auf eine Pulvertragestruktur (208) an dem Verteilungsmechanismus (180).

11. Verfahren gemäß Anspruch 10, weiterhin aufweisend ein Entfernen der ersten Menge von Pulver (184) von der Pulvertragestruktur an einer Seite benachbart zu dem Zielgebiet (186).

12. Verfahren gemäß Anspruch 1, wobei
(a) nach dem ersten Einebnungsschritt das Vorheizen der ersten Menge von Pulver (184) mittels Strahlungswärme durchgerührt wird; und
(b) nach dem zweiten Einebnungsschritt das Vorheizen der zweiten Menge von Pulver (185) mittels Strahlungswärme durchgeführt wird.

13. Verfahren gemäß Anspruch 12, weiterhin aufweisend das Verwenden von Laserenergie, um die erste Menge und die zweite Menge von Pulver aufzuheizen.

14. Vorrichtung (150) zur Herstellung von Bauteilen aus einem Pulver, aufweisend in Kombination:
(a) eine Kammer (152) mit einem Zielgebiet (186) in dem ein additiver Prozess durchgeführt wird, wobei das Zielgebiet (186) eine erste Seite und eine gegenüberliegende zweite Seite aufweist;
(b) Mittel (154) zum Verschmelzen von ausgewählten Bereichen einer Schicht des Pulvers in dem Zielgebiet (186);
(c) ein Pulverzuführtrichter (162, 164), welcher oberhalb und an der ersten Seite des Zielgebiets (186) angeordnet ist, um eine erste und eine zweite Menge von Pulver (184, 185) in die Kammer (152) abzugeben;
(d) Mittel (180) zum Verteilen der ersten Menge von Pulver (184) als eine erste Schicht von Pulver über dem Zielgebiet (186);
(e) Mittel (192, 204) zum Ablagern der zweiten Menge von Pulver (185) an der zweiten Seite des Zielgebiets (186);
(f) Mittel (180) zum Verteilen der zweiten Menge von Pulver (185) über dem Zielgebiet (186);
(g) Mittel (160) zum Vorheizen der Mengen von Pulver (184, 185) in der Kammer; **gekennzeichnet durch**
(h) Mittel (204) zum Einebnen der ersten Menge von Pulver (184) bevor sie verteilt wird;
(i) Mittel (204) zum Einebnen der zweiten Menge von Pulver (185) bevor sie verteilt wird; wobei
(j) das Mittel (180) zum Verteilen der ersten Menge von Pulver (184) eine Tragoberfläche (208) aufweist, um die zweite Menge von Pulver (185) aufzunehmen und um die zweite Menge von Pulver (185), die zur Bildung einer zweiten Schicht von Pulver (185) verwendet wird, zu der gegenüberliegenden zweiten Seite des Zielgebiets (186) zu tragen, während die erste Menge von Pulver (184) verteilt wird.

15. Vorrichtung gemäß Anspruch 14, wobei das Mittel (180) zum Verteilen aufweist:
(a) eine Rolle; und
(b) einen Motor, der mit der Rolle gekoppelt ist, um die Rolle über das Zielgebiet (186) zu bewegen, um die erste Schicht von Pulver (184) zu verteilen.

16. Vorrichtung gemäß Anspruch 14, wobei das Mittel (192, 204) zum Ablagern der zweiten Menge von Pulver (185) an der zweiten Seite des Zielgebiets (186) weiterhin eine Vorrichtung (192) aufweist, zum Entfernen der zweiten Menge von Pulver (185) von der Tragoberfläche (204).

17. Vorrichtung gemäß Anspruch 16, wobei die Vorrichtung (192) zum Entfernen der zweiten Menge von Pulver (185) eine feststehende Klinge (192) ist.

18. Vorrichtung gemäß Anspruch 14, weiterhin aufweisend eine zweite Vorrichtung (193) zum Entfernen von Pulver von der Tragoberfläche (204), welche an der, der ersten Vorrichtung (192) gegenüberliegenden Seite des Zielgebiets (186), angeordnet ist.

19. Vorrichtung gemäß Anspruch 18, wobei die zweite Vorrichtung (193) zum Entfernen von Pulver weiterhin eine zweite feststehende Klinge (193) auf weist.

20. Vorrichtung gemäß Anspruch 14, wobei das Mittel zum Verschmelzen von ausgewählten Bereichen einer Schicht von Pulver in dem Zielgebiet aufweist:
(a) einen Energiestrahl (154);
(b) ein optisches Spiegelsystem (114), um den Energiestrahl (154) zu richten; und
(c) ein Energiestrahl-Steuerungsmittel, das mit dem optischen Spiegelsystem (114) verbunden ist, welches Computermittel aufweist, wobei die Computermittel mit Informationen programmiert sind, welche die gewünschten Grenzen einer Mehrzahl von Querschnitten des herzustellenden Bauteils anzeigen.

21. Vorrichtung gemäß Anspruch 20, wobei der Energiestrahl (154) ein Laserenergiestrahl (154) ist.

22. Vorrichtung gemäß Anspruch 15, weiterhin aufweisend Abdeckungselemente (204), die an gegenüberliegenden Seiten der Tragoberfläche (208) befestigt sind, um sowohl die erste als auch die zweite Menge von Pulver (184, 185) einzuebnen.

23. Vorrichtung gemäß Anspruch 16, wobei die Abdeckungselemente (204), die an der Tragoberfläche (208) befestigt sind, sich nach unten und weg von der Tragstruktur bis zu einer Höhe über dem Zielgebiet (186) erstrecken, die der gewünschten Höhe einer eingeebneten Pulverwelle entspricht.

24. Vorrichtung gemäß Anspruch 14, wobei die Mittel (160) zum Aufheizen des Pulvers Strahlungsheizelemente (160) sind.

25. Vorrichtung gemäß Anspruch 24, wobei die Mittel zum Aufheizen des Pulvers weiterhin einen Laserenergiestrahl (154) aufweisen.

## Revendications

1. Procédé de fabrication d'un article tridimensionnel par frittage au laser, comprenant les étapes de :
(a) dépôt, dans une première étape de dépôt, d'une première quantité de poudre (184) sur un premier côté d'une zone cible (186) ;
(b) aplatissement, dans une première étape d'aplatissement, de la première quantité de poudre (184) sur le premier côté de la zone cible (186) ;
(c) préchauffage de la première quantité aplatie de poudre (184) ;
(d) étalement, dans une première étape d'étalement, de la première quantité de poudre (184) par un mécanisme d'étalement (180), afin de former une première couche de poudre ;
(e) orientation d'un faisceau d'énergie (154) sur la zone cible (186), pour amener la première couche de poudre à constituer une couche d'un seul tenant ;
(f) dépôt, dans une seconde étape de dépôt, d'une seconde quantité de poudre (185) sur un second côté de la zone cible (186), situé à l'opposé ;
(g) aplatissement, dans une seconde étape d'aplatissement, de la seconde quantité de poudre (185) sur le second côté de la zone cible (186) ;
(h) préchauffage de la seconde quantité aplatie de poudre (185) ;
(i) étalement, dans une seconde étape d'étalement, de la seconde quantité de poudre (185) par le mécanisme d'étalement (180), afin de former une seconde couche de poudre ;
(j) orientation d'un faisceau d'énergie (154) sur la zone cible (186), pour amener la seconde couche de poudre à constituer une seconde couche d'un seul tenant, liée à la première couche d'un seul tenant ;
(k) répétition des étapes (a) à (j) pour former des couches supplémentaires qui sont liées d'un seul tenant à des couches adjacentes afin de constituer un article tridimensionnel, dans lequel la première étape de dépôt comprend l'amenée de la première quantité de poudre (184) devant le mécanisme d'étalement (180) et l'amenée de la seconde quantité de poudre (185) sur le mécanisme d'étalement (180), dans lequel la seconde quantité de poudre (185) est transportée, pendant la première étape d'étalement, depuis le premier côté jusqu'au second côté de la zone cible (186), et la seconde étape de dépôt comprend le détachement de la seconde quantité de poudre (185) du mécanisme d'étalement (180) en mouvement, pour déposer la seconde quantité de poudre sur le second côté de la zone cible (186).

2. Procédé selon la revendication 1, comprenant en outre l'utilisation d'un rouleau (180) en tant que mécanisme d'étalement.

3. Procédé selon la revendication 2, dans lequel le rouleau (180) est un rouleau à contrarotation.

4. Procédé selon la revendication 1, comprenant en outre l'utilisation d'une racle à mouvement alternatif en tant que mécanisme d'étalement.

5. Procédé selon la revendication 3, comprenant l'utilisation d'un faisceau laser (154) dans l'étape d'orientation.

6. Procédé selon la revendication 5, dans lequel le faisceau laser (154) est un laser à gaz carbonique.

7. Procédé selon la revendication 1, comprenant en outre le dépôt de la quantité de poudre (184, 185) à partir d'un mécanisme suspendu d'alimentation (162, 164), sur une structure de support de poudre (208) située sur le mécanisme d'étalement (180).

8. Procédé selon la revendication 1, dans lequel le détachement de la seconde quantité de poudre (185) du mécanisme d'étalement (180) en mouvement est effectué par une racle fixe (192).

9. Procédé selon la revendication 1, dans lequel les étapes d'aplatissement utilisent un couvercle (204) fixé au mécanisme d'étalement (180), aplatissant les première et seconde quantités de poudre (184, 185) après leur dépôt.

10. Procédé selon la revendication 1, comprenant en outre le dépôt de la première quantité de poudre (184) à partir d'un mécanisme suspendu d'alimentation (162, 164), sur une structure de support de poudre (208) située sur le mécanisme d'étalement (180).

11. Procédé selon la revendication 10, comprenant en outre le détachement de la première quantité de poudre (184) de la structure de support de poudre, sur un côté adjacent à la zone cible (186).

12. Procédé selon la revendication 1, dans lequel :
(a) après la première étape d'aplatissement, le préchauffage de la première quantité de poudre (184) est effectué au moyen de chaleur rayonnante ; et
(b) après la seconde étape d'aplatissement, le préchauffage de la seconde quantité de poudre (185) est effectué au moyen de chaleur rayonnante ;

13. Procédé selon la revendication 12, comprenant en outre l'utilisation d'énergie laser pour chauffer la première quantité et la seconde quantité de poudre.

14. Appareil (150) pour la fabrication de pièces à partir d'une poudre, comprenant en combinaison :
(a) une enceinte (152) comportant une zone cible (186) au niveau de laquelle un processus d'apport est effectué, la zone cible (186) présentant un premier côté et un second côté, à l'opposé ;
(b) des moyens (154) pour faire fondre des parties sélectionnées d'une couche de poudre au niveau de la zone cible (186) ;
(c) une trémie d'alimentation en poudre (162, 164) située au-dessus de la zone cible (186) et du premier côté de celle-ci, pour déposer une première et une seconde quantité de poudre (184, 185) dans l'enceinte (152) ;
(d) des moyens (180) pour étaler la première quantité de poudre (184) en tant que première couche de poudre sur la zone cible (186) ;
(e) des moyens (192, 204) pour déposer la seconde quantité de poudre (185) sur le second côté de la zone cible (186) ;
(f) des moyens (180) pour étaler la seconde quantité de poudre (185) sur la zone cible (186) ;
(g) des moyens (160) pour préchauffer les quantités de poudre (184, 185) dans l'enceinte ; **caractérisé par**
(h) des moyens (204) pour aplatir la première quantité de poudre (184) avant de l'étaler ;
(i) des moyens (204) pour aplatir la seconde quantité de poudre (185) avant de l'étaler ; dans lequel
(j) les moyens (180) servant à étaler la première quantité de poudre (184) comprennent une surface de support (208) prévue pour recevoir la seconde quantité de poudre (185) et pour acheminer la seconde quantité de poudre (185), pendant l'étalement de la première quantité de poudre (184), jusqu'au second côté opposé de la zone cible (186), à utiliser pour la formation d'une seconde couche de poudre (185).

15. Appareil selon la revendication 14, dans lequel les moyens (180) servant à l'étalement comprennent :
(a) un rouleau ; et
(b) un moteur, relié au rouleau afin de déplacer le rouleau d'un bout à l'autre de la zone cible (186), pour étaler la première couche de poudre (184).

16. Appareil selon la revendication 14, dans lequel les moyens (192, 204) servant au dépôt de la seconde quantité de poudre (185) sur le second côté de la zone cible (186) comprennent en outre un dispositif (192) pour détacher la seconde quantité de poudre (185) de la surface de support (204).

17. Appareil selon la revendication 16, dans lequel le dispositif (192) servant à détacher la seconde quantité de poudre (185) est une lame fixe (192).

18. Appareil selon la revendication 14, comprenant en outre un second dispositif (193) pour détacher la poudre de la surface de support (204), placé sur le côté opposé de la zone cible (186) par rapport au premier dispositif (192).

19. Appareil selon la revendication 18, dans lequel le second dispositif (193) servant à détacher la poudre comprend en outre une seconde lame fixe (193).

20. Appareil selon la revendication 14, dans lequel les moyens servant à faire fondre des parties sélectionnées d'une couche de poudre au niveau de la zone cible comprennent :
(a) un faisceau d'énergie (154) ;
(b) un système optique à miroirs (114) pour orienter le faisceau d'énergie (154) ; et
(c) des moyens de commande du faisceau d'énergie, reliés au système optique à miroirs (114) et comprenant des moyens informatiques, les moyens informatiques étant programmés avec des informations représentatives des limites désirées d'une pluralité de sections transversales de la pièce à fabriquer.

21. Appareil selon la revendication 20, dans lequel le faisceau d'énergie (154) est un faisceau d'énergie laser (154).

22. Appareil selon la revendication 15, comprenant en outre des éléments formant couvercles (204) fixés sur la surface de support (208) sur ses côtés opposés et servant à aplatir chacune de la première et de la seconde quantité de poudre (184, 185).

23. Appareil selon la revendication 16, dans lequel les éléments formant couvercles (204) fixés sur la surface de support (208) s'étendent vers le bas et à distance de la structure de support jusqu'à une hauteur au-dessus de la zone cible (186), équivalente à une hauteur désirée d'une vague de poudre aplatie.

24. Appareil selon la revendication 14, dans lequel les moyens (160) servant à chauffer la poudre sont des éléments chauffants par rayonnement (160).

25. Appareil selon la revendication 24, dans lequel les moyens servant à chauffer la poudre comprennent en outre un faisceau d'énergie laser (154).
